Europäisches Patentamt

European Patent Office

Office européen des brevets

(19)

(11) Publication number: **0 280 226**
**A2**

# EUROPEAN PATENT APPLICATION

(21) Application number: 88102548.0

(22) Date of filing: 22.02.88

(51) Int. Cl.⁴: **A23K 1/18** , A23K 1/14 , A23K 1/165

(30) Priority: 23.02.87 FI 870752
15.05.87 FI 872148

(43) Date of publication of application:
31.08.88 Bulletin 88/35

(84) Designated Contracting States:
AT BE CH DE ES FR GB GR IT LI LU NL SE

(71) Applicant: SUOMEN SOKERI OY
P.O. Box 46
SF-02101 Espoo(FI)

(72) Inventor: Haarasilta, Asko Niilo Olavi
Putousrinne 1D 26
SF-01600 Vantaa(FI)
Inventor: Vaheri, Marja Päivikki
Lystimäenkuja 1 A
SF-02210 Espoo(FI)
Inventor: Helander, Eija
Vuohikuja 2 A 14
SF-00780 Helsinki(FI)

(74) Representative: Reinhard, Skuhra, Weise
Leopoldstrasse 51
D-8000 München 40(DE)

(54) Poultry feed, feeding method, and procedure for improving the digestibility of poultry feed.

(57) A poultry feed containing protein raw material, carbohydrate raw material and lignocellulose-containing natural material and fibre raw material at least 5 % by weight, advantageously over 15 % by weight and enzyme preparation improving the digestability of lignocellulose containing natural material added thereto, up to 1 % by weight.

EP 0 280 226 A2

## POULTRY FEED, FEEDING METHOD, AND PROCEDURE FOR IMPROVING THE DIGESTIBILITY OF POULTRY FEED

The invention concerns a poultry feed composition containing, among other things, protein raw material, carbohydrate raw material, natural material containing lignocellulose, i.e., hemicellulose, lignin and cellulose, such as oat husts, wheat husks, barley husks, hay and/or straw. The invention further concerns a feeding method for improving the utilizability of poultry feed, and a procedure for improving the digestibility of poultry feed.

It is not usual nowadays to use in poultry feeds for filler, powders containing oat husks or other lignocellulosic natural materials. Excessive fibre content in feeds is known to be detrimental.

The use of lignocellulose-containing natural material as filler is restricted by the poor nutritive value of these materials and by digestion trouble caused by their indigestibility. The feed value of oat husks is only about 15% of that of wheat flour (Finnish Feed Tables, 1982). Indigestible fibres have an influence on the passage time of. the feed mass to be digested which is progressing through the digestive tract. The flow-through rate in the digestive tract of the feed mass to be digested is known to influence the digestion of the nutrients in the feed and their absorption by the organism. Indigestible fibres bind nutrients and digestion-promoting substances secreted by the digestive tract, thus impeding optimal utilization of nutrients.

The drawbacks outlined above increase the food requirements of poultry and impair e.g. the egg production. It has been assumed possible, at a maximum, to add 5-6% lignocellulose-containing natural material, counted on the feed quantity, without incurring digestion trouble.

Usually poultry feed, such as whole feed, contains raw materials utilizable in the organism of poultry, such as cereal flour, protein raw materials, e.g. soybean meal, and/or fish meal, fats, salts, vitamins and trace elements. The proportion of cereal flour, such as wheat, barley and/or oat flour, in the feed is very high, over 60% by weight. However, cereal flours are rather expensive feed raw materials.

The object of the present invention is to provide a novel poultry feed, in particular a whole feed, which contains inexpensive raw materials and which therefore is advantageous as to its price.

It is a further object of the invention to provide a poultry feed, in particular a whole feed, which in its effect on production, and regarding nutrition, is fully equivalent with existing, more expensive poultry feeds.

It is a further object of the invention to eliminate the above-described detriments which have been caused by use of certain fibres.

It is a particular object of the invention to provide a novel poultry feed containing lignocellulose-containing natural material which has a nutritive value higher than that of feeds containing lignocellulose-containing natural material, in general.

It is a further object of the invention to provide a feeding method by which the utilizability of feed containing lignocellulose-containing natural material is improved. Fibre raw material contains, in addition to fibres, also other organic and inorganic constituents.

Regarding the features which are characteristic of the invention, reference is made to the claims.

"Fibre" is a generic appellation for that fragment of the feed which is indigestible within an animal. Chemically, it is composed of various carbohydrate polymers, such as cellulose, hemicellulose and pectin, and of lignin-type compounds.

There are significant differences in the chemical structure of the fibre between feed raw materials.

It is commonly known that it is possible, with fibre, to achieve both positive and negative effects in human nutrition. The soluble viscose, i.e., the gel-forming part, in the fibre behaves differently in the intestine from the insoluble part. Viscose is considered useful in human nutrition because it is believed to exert a positive influence on intestinal function. In regard of feed efficiency, however, it appears to have a negative effect.

With the aid of the invention those properties which are favourable to poultry can be well brought to the fore; when required, the harmful fibre fraction is eliminated with the aid of enzyme addition. Enzymes decompose the undesirable fibre fraction from the animal's organism, while at the same time the fraction which is useful to poultry stimulates the secretion of the animal's own intestinal fluids and enzymes.

The invention relating to the positive effects of fibre is based on the results unexpectedly observed in poultry feeding tests, according to which when poultry feed, e.g. whole feed, contains large amounts of fibre raw material, the utilization of the utilizable raw materials in whole feed improves. The results recorded in these feeding tests are completely contrary to prior knowledge. The new results imply a substantial change in attitudes towards poultry feeding on the whole.

In the poultry feed of the invention, for instance in whole feed, part of the cereal products usually used in poultry feeds has been replaced with fibre raw material. The digestion and absorption of the utilizable constituents in the feed is enhanced in the poultry organism when the feed contains fibre raw materials, whereby the proportion of utilizable feed raw materials, e.g. of cereal products, in the feed may be less than in prior art.

The poultry feed of the invention, for instance whole feed, contains fibre raw material at least about 5% by weight, suitable over 10% by weight, and advantageously over 15% by weight.

The feed of the invention, for instance whole feed, may contain fibre raw materials about 15-50% by weight, suitably about 25-30% by weight, of the total feed quantity. The favourable fibre proportion in feed containing about 25-30% by weight fibre raw material (determination by the method of the Finnish State Agrochemistry Laboratory relating to crude fibre) is about 15-18% by weight. For fibre raw material may be used the above-mentioned inexpensive lignocellulose-containing plant fibres, such as husks and/or husk fractions of cereal plants, e.g. wheat, oats, barley, corn and/or rice, shells and/or shell fractions of oil plants, hay, straw and/or alfalfa. For fibre raw material may also be used fibrous byproducts of the wood conversion industry, for instance so-called null fibre, which is short-fibre cellulose, or fibres treated in various ways, for instance woof fibres treated by the steam-exploding procedure.

The feed may in addition contain cereal products, for instance about 20-70% by weight, advantageously 40-60% by weight of the total feed quantity. Furthermore there may be, added to the feed, enzyme preparation known in itself in the art which improves the digestibility and feed value of lignocellulose-containing natural material and its production effect, up to 1% by weight, counted on the total quantity of completed feed. The enzyme preparation cleaves those constituents of lignocellulose-containing natural material which are indigestible in the poultry organism, such as indigestible fibres, converting them to digestible state. The nutritive value of the feed will then also increase, and detrimental disturbances of digestion are avoided.

The quantity of enzyme preparation contained in a feed prepared from oat husk powder is advantageously 0.1-1% by weight. Such feed is well digestible and substantially fully utilizable; the calculated feed value according to the feed table is 7.5 MJ convertible energy per kg when the proportion of oat husks is 15-20%, but the true, experimental feed value for this kind of feed containing enzyme preparation has been found to be 10 (MJ convertible energy per kg).

The enzyme preparation contained in the feed of the invention contains advantageously hemicellulase decompositing entzyme, such as cellulase, 0.001-0.2% by weight, cellobiase 0.001-0.2% by weight or xylanase 0.001-0.003% by weight, calculated on the quantity of complete feed. The feed may equally contain a mixed preparation of these enzymes. Depending on the composition of the feed, the feed may also contain other hydrolase enzyme preparations, such as starch-decomposing glucanases and amylases. The enzyme preparations used in the feed of the invention are, for instance, commercial products known in the art, or other enzymes suited to the purpose in hand.

In case such fibre raw material is used in which no harmful components of fibre are present, no enzyme need be added.

When the feed of the invention is a whole feed, it contains suitably protein raw material about 15-25% by weight, fat about 4% by weight, salts about 3% by weight and vitamins and trace elements about 1% by weight.

The feed may be granular of its state.

The poultry feed of the invention is advantageously dry, and the enzyme preparation contained in the feed has been impregnated into or admixed to a dry carrier, such as vegetable meal, and granulated e.g. by the procedure which is disclosed in the Finnish patent application No. 863393, whereby its enzymatic action directed on the feed becomes activated advantageously not until in the digestive tract of the poultry.

For cereal products may be used barley, oat, wheat or other equivalent flour.

Of the protein raw material, the proportion of protein (N x 6.25) is advantageously 11-19% by weight of the total feed quantity. For protein raw material may be used e.g. soybean meal and/or fish meal. If required, amino acids may be added to the whole feed, such as methionine and/or lysine.

For fat source in the feed, e.g. whole feed, may be used for instance soybean oil. The whole feed may contain salts, for instance calcium phosphate, calcium carbonate, sodium chloride and/or sodium sulphate. Necessary trace elements are, for instance, iron, manganese, zinc, copper, cobalt, selenium and/or iodine. Choline chloride and/or betaine may be added to whole feed if required.

Poultry is obviously able to utilize only part of presently existing feeds or whole feed notwithstanding the fact that it contains nothing but raw materials utilizable in the organism of the fowls. When feed according to the invention containing fibre raw material, e.g. whole feed, is used, the poultry organism can better utilize also the said unutilized part. Thereby, the feed of the invention, which contains less utilizable raw materials, that is cereal products, is fully equivalent regarding nutritional value and effects on production with existing feeds which mainly contain exclusively utilizable feed raw materials.

Since in the poultry feed of the invention, for instance in whole feed, part of the expensive cereal products has been replaced with inexpensive fibre raw material, the feed is favourable as to its price. Moreover, the consumption of the feed of the invention in poultry feeding is equivalent with the consumption of existing feeds, whereby the use of the feed of the invention becomes considerably more advantageous.

In the feeding method of the invention, to poultry feed containing lignocellulose-containing natural material, such as oat husks, wheat husks, barley husks, hay and/or straw, is added, in connection with feeding, enzyme or enzyme mix improving the digestibility of lignocellulose-containing natural material, at 0.001-1% by weight of the total weight of completed feed.

It is possible by the feeding method of the invention to improve the utilizability of feed with low food value which contains lignocellulose-containing natural material.

The invention is described in detail in the following with the aid of embodiment examples.


## EXAMPLE 1

A study was made in a test of whether the wheat contained in feed mixes intended for laying hens can be replaced with oat husks, and the use of two different enzyme mixes in these feed mixes was tested. The test comprised eight 28-day periods.

At the start of the test there were 4 x 92 hens in each feed group. Hens of the strains Mä-16 and Mu-27 served as experimental animals, both in equal number. The oat husks had been ground in a hammer mill.

Examples of the feed mixes are presented in Table 1. Feeds No. 6 and 7 are control feeds. In control feed No. 7, the wheat, 30% by weight, was half replaced with oat husk meal. In trial feeds No. 9 and 11, the wheat, 30% by weight, has been half replaced with oat husk meal, and in trial feeds No. 12 and 13 the wheat, 30% by weight, has been totally replaced with oat husk meal. Feeds No. 9 and 12 contain enzyme mix A (cellulase), and feeds No. 11 and 13 contain enzyme mix B (cellulase and xylanase). Enzyme mix has been added 1% of the feed quantity. The compositions of the enzyme mixes are also displayed in Table 1.

## TABLE 1

### ENZYME MIX AND OAT HUSKS ADMINISTERED TO LAYING HENS

Compositions of trial feeds and enzyme mixes

| | Trial Feed No. | | | | | |
|---|---|---|---|---|---|---|
| Raw material | 6 | 7 | 9 | 11 | 12 | 13 |
| Wheat | 30,0 | 15,0 | 15,0 | 15,0 | - | - |
| Oat husk | | 15,0 | 15,0 | 15,0 | 30,0 | 30,0 |
| Enzyme or enzyme mix *) | | | A | B | A | B |
| Soy bean meal | 10,4 | 10,4 | 10,4 | 10,4 | 10,4 | 10,4 |
| Fish meal | 2,0 | 2,0 | 2,0 | 2,0 | 2,0 | 2,0 |
| Meat/bone meal | 4,0 | 4,0 | 4,0 | 4,0 | 4,0 | 4,0 |
| Barley | 23,92 | 23,92 | 23,92 | 23,92 | 23,92 | 23,92 |
| Oats | 15,0 | 15,0 | 15,0 | 15,0 | 15,0 | 15,0 |
| Green granulate | 4,0 | 4,0 | 4,0 | 4,0 | 4,0 | 4,0 |
| Fat mixture | 3,0 | 3,0 | 3,0 | 3,0 | 3,0 | 3,0 |
| Lime | 6,4 | 6,4 | 6,4 | 6,4 | 6,4 | 6,4 |
| Seaweed concentrate | 0,3 | 0,3 | 0,3 | 0,3 | 0,3 | 0,3 |
| Salt | 0,15 | 0,15 | 0,15 | 0,15 | 0,15 | 0,15 |
| DL-methionine | 0,06 | 0,06 | 0,06 | 0,06 | 0,06 | 0,06 |
| Premixes | 0,77 | 0,77 | 0,77 | 0,77 | 0,77 | 0,77 |

Composition of the enzyme or enzyme mix (per ton of completed feed mix)

| | A | B |
|---|---|---|
| Cellulase, SSOY preparation | 1.6 kg | 1.6 kg |
| Xylanase, commercial preparation | | 25 kg |

*) Enzyme or enzyme mix admixed to barley to make an enzyme premix; dosage 1%.

In Table 2 are given the chemical analyses of the feeds in Table 1, and the calculated food values.

## TABLE 2

ENZYME MIX AND OAT HUSKS ADMINISTERED TO LAYING HENS

Analysis data of the feed mixes

| Analyzed values, % | Feed No. | | | | | |
|---|---|---|---|---|---|---|
| | 6 | 7 | 9 | 11 | 12 | 13 |
| Moisture | 11,0 | 10,5 | 10,5 | 10,5 | 9,6 | 9,8 |
| Crude protein | 16,6 | 16,4 | 15,8 | 15,9 | 14,9 | 14,5 |
| Fat | 5,2 | 5,4 | 5,4 | 5,4 | 5,3 | 5,3 |
| Crude fibre | 5,9 | 9,5 | 10,5 | 10,0 | 14,2 | 13,7 |
| Ash | 9,1 | 9,2 | 10,2 | 9,2 | 10,5 | 10,5 |
| Calcium | 2,80 | 2,46 | 2,72 | 2,54 | 2,81 | 2,93 |
| Phosphorus | 0,72 | 0,70 | 0,68 | 0,68 | 0,66 | 0,66 |
| NaCl | 0,39 | 0,41 | 0,42 | 0,39 | 0,43 | 0,43 |
| Number of analyses | 3 | 3 | 3 | 3 | 2 | 2 |

Calculated values:

| | | | | | | |
|---|---|---|---|---|---|---|
| ME, MJ/kg | 10,95 | 9,27 | 9,27 | 9,27 | 7,58 | 7,58 |
| Methionine, % | 0,32 | 0,30 | 0,30 | 0,30 | 0,28 | 0,28 |
| Meth+Cystine, % | 0,61 | 0,57 | 0,57 | 0,57 | 0,53 | 0,53 |
| Lysine, % | 0,73 | 0,71 | 0,71 | 0,71 | 0,68 | 0,68 |

In Tables 3 and 4 are stated the results from periods 1-8.

TABLE 3

ENZYME MIX AND OAT HUSKS ADMINISTERED TO LAYING HENS
Most important results, periods 1-8

15% oat husks

|  | Untreated | Avizyme | |
|---|---|---|---|
|  |  | A | B |
| Egg-laying percentage | 77,9 | 79,4 | 78,1 |
| Egg weight, g | 56,1 | 56,0 | 56,5 |
| Egg mass, g/day/hen | 43,7 | 44,5 | 44,1 |
| Feed intake, g/day/hen | 113,6 | 110,1 | 112,5 |
| Feed efficiency, kg feed/kg eggs | 2,59 | 2,47 | 2,54 |

30% oat husks

|  | Untreated | Avizyme | |
|---|---|---|---|
|  |  | A | B |
| Egg-laying percentage |  | 79,6 | 78,2 |
| Egg weight, g |  | 56,1 | 55,7 |
| Egg mass, g/day/hen |  | 44,6 | 43,6 |
| Feed intake, g/day/hen |  | 115,6 | 110,3 |
| Feed efficiency, kg feed/kg eggs |  | 2,59 | 2,53 |

TABLE 4

ENZYME MIX AND OAT HUSKS ADMINISTERED TO LAYING HENS

Results, 8 periods

| Group | Feed No. | Periods | Egg laying perc. | Egg weight, g | Egg production g/day/hen | Cracked, % | Feed intake, g/day/hen | Feed efficiency, kg/kg | Mortality, % |
|---|---|---|---|---|---|---|---|---|---|
| Control | 6 | 1-4 | 79,8 | 53,0 | 42,3 | 6,5 | 102,3 | 2,42 | 0,83 |
| | | 1-6 | 80,5 | 54,9 | 44,2 | 6,2 | 103,3 | 2,34 | 1,38 |
| | | 1-8 | 79,9 | 56,4 | 45,1 | 6,7 | 104,8 | 2,32 | 2,02 |
| | | Relative | 100,0 | 100,0 | 100,0 | | 100,0 | 100,0 | |
| Oat husks 15% | 7 | 1-4 | 77,0 | 53,0 | 40,8 | 6,8 | 112,4 | 2,75 | 0,52 |
| | | 1-6 | 78,3 | 54,8 | 43,0 | 6,6 | 113,2 | 2,63 | 0,83 |
| | | 1-8 | 77,9 | 56,1 | 43,7 | 6,7 | 113,6 | 2,59 | 1,31 |
| | | Relative | 97,5 | 99,5 | 96,9 | | 108,8 | 111,6 | |
| Oat husks 15% Avizyme A | 9 | 1-4 | 79,0 | 52,8 | 41,8 | 6,2 | 107,6 | 2,58 | 0,45 |
| | | 1-6 | 80,0 | 54,7 | 43,7 | 6,2 | 109,4 | 2,50 | 0,80 |
| | | 1-8 | 79,4 | 56,0 | 44,5 | 6,9 | 110,1 | 2,47 | 1,12 |
| | | Relative | 99,4 | 99,3 | 98,7 | | 105,1 | 106,5 | |
| Oat husks 15% Avizyme B | 11 | 1-4 | 77,4 | 53,3 | 41,2 | 6,7 | 109,6 | 2,66 | 0,65 |
| | | 1-6 | 78,5 | 55,1 | 43,3 | 7,0 | 111,5 | 2,58 | 1,12 |
| | | 1-8 | 78,1 | 56,5 | 44,1 | 7,2 | 112,5 | 2,54 | 1,72 |
| | | Relative | 97,7 | 100,2 | 97,8 | | 107,3 | 109,5 | |
| Oat husks 30% Avizyme A | 12 | 1-4 | 79,7 | 53,1 | 42,3 | 6,4 | 112,6 | 2,66 | 0,27 |
| | | 1-6 | 80,2 | 54,7 | 43,9 | 6,6 | 114,4 | 2,61 | 0,60 |
| | | 1-8 | 79,6 | 56,1 | 44,6 | 7,1 | 115,9 | 2,59 | 0,86 |
| | | Relative | 99,6 | 99,5 | 98,9 | | 110,6 | 111,6 | |
| Oat husks 30% Avizyme B | 13 | 1-4 | 78,9 | 52,9 | 41,8 | 6,8 | 107,4 | 2,57 | 0,13 |
| | | 1-6 | 79,1 | 54,5 | 43,1 | 6,6 | 108,7 | 2,52 | 0,64 |
| | | 1-8 | 78,2 | 55,7 | 43,6 | 7,0 | 110,3 | 2,53 | 1,23 |
| | | Relative | 97,9 | 98,8 | 96,7 | | 105,2 | 109,1 | |

0 280 226

With the test feeds containing 15% oat husks, egg laying percentage, feed efficiency, egg weight and egg mass production are on a level with the control feed. Egg-laying is 0.6-2,5% lower, -and egg mass production 1.3-3.1% lower, than in the control group. The hens eat 5.1-8.8% more feed than the hens in the control group; thus the feed efficiency is poorer in the amount of 0.15-0.27 kg/kg eggs.

At the 30% oat husk level, the relative figures also remain on the same level. Egg-laying is 0.4-2.1% poorer, and feed intake 9.1-11.6% higher, than with the control feed. The feed efficiency figures are 0.21-0.27 kg/kg eggs lower than in the control group.

The enzyme addition produced a fully utilizable feed of the mix containing 30% oat husks. The good egg production result indicates that the hens utilized the feed excellently, and no disturbances of digestion whatsoever occurred. Utilization was significantly better than could have been expected on the strength of any pre-calculated estimate.

EXAMPLE 2 Some whole feeds according to the invention for use in feeding laying hens

In Table 5 are presented various feed compositions used in feeding laying hens. Feed No. 1 is a control feed, and feeds No. 2, 3, 4, 5, 6 and 7 are various feeds according to the invention containing fibre raw material.

In addition, the calculated energy values of each feed have been entered in Table 5.

## TABLE 5

| Raw material, % by weight | Feed No. | | | | | | |
|---|---|---|---|---|---|---|---|
| | 1 | 2 | 3 | 4 | 5 | 6 | 7 |
| Wheat | 30,0 | 15,0 | -- | -- | 15,0 | -- | 15,0 |
| Barley | 23,92 | 23,92 | 23,92 | 23,92 | 23,92 | 23,92 | 23,92 |
| Oats | 15,0 | 15,0 | 15,0 | 15,0 | 15,0 | 15,0 | 15,0 |
| Soy bean meal | 10,4 | 10,4 | 10,4 | 10,4 | 10,4 | 10,4 | 10,4 |
| Fish meal | 2,0 | 2,0 | 2,0 | 2,0 | 2,0 | 2,0 | 2,0 |
| Meat/bone meal | 4,0 | 4,0 | 4,0 | 4,0 | 4,0 | 4,0 | 4,0 |
| Green meal | 4,0 | 4,0 | 4,0 | 4,0 | 4,0 | 4,0 | 4,0 |
| Feed fat | 3,0 | 3,0 | 3,0 | 3,0 | 3,0 | 3,0 | 3,0 |
| Lime | 6,4 | 6,4 | 6,4 | 6,4 | 6,4 | 6,4 | 6,4 |
| Seaweed extract | 0,3 | 0,3 | 0,3 | 0,3 | 0,3 | 0,3 | 0,3 |
| Salt | 0,15 | 0,15 | 0,15 | 0,15 | 0,15 | 0,15 | 0,15 |
| Methionine | 0,06 | 0,06 | 0,06 | 0,06 | 0,06 | 0,06 | 0,06 |
| Vitamins + Trace elem. | 0,77 | 0,77 | 0,77 | 0,77 | 0,77 | 0,77 | 0,77 |
| Oat husks | | 15,0 | 30,0 | | | | |
| Steam-exploded Birch biomass | | | | 30,0 | 15,0 | | |
| Straw, ground | | | | | | 30,0 | 15,0 |
| Calculated food values | | | | | | | |
| Energy, MJ/kg | 11,0 | 9,3 | 7,6 | 7,5 | 9,2 | 7,5 | 9,2 |

In Table 6 are presented the chemical compositions of the feeds in Table 5.

## TABLE 6

### Chemical compositions of feeds, % by weight

|               | 1    | 2    | 3    | 4    | 5    | 6    | 7    |
|---------------|------|------|------|------|------|------|------|
| Moisture      | 11,0 | 10,5 | 9,6  | 9,5  | 10,6 | 9,4  | 10,5 |
| Crude protein | 16,6 | 16,0 | 14,9 | 14,5 | 16,0 | 14,7 | 15,0 |
| Crude fat     | 5,2  | 5,4  | 5,3  | 5,3  | 5,4  | 5,1  | 5,0  |
| Crude fibre   | 5,9  | 9,5  | 14,2 | 14,8 | 9,8  | 15,0 | 9,6  |
| Ash           | 9,1  | 9,2  | 10,5 | 9,6  | 9,8  | 10,3 | 9,8  |
| Calcium       | 2,8  | 2,5  | 2,8  | 2,7  | 2,6  | 2,6  | 2,8  |
| Phosphorus    | 0,72 | 0,70 | 0,66 | 0,71 | 0,73 | 0,69 | 0,65 |
| NaCl          | 0,39 | 0,41 | 0,43 | 0,40 | 0,40 | 0,35 | 0,39 |

Equally good egg-laying results were obtained in the feeding tests with the control feed and with the feeds according to the invention.

EXAMPLE 3 Some whole feeds according to the invention used in connection with the feeding of broilers

In Table 7 are presented various feed compositions used in feeding broilers. Feed No. 1 is a control feed, and feed No. 2, 3 and 4 are feeds according to the invention containing fibre raw material. In addition, the calculated energy values of the feeds have been entered in Table 7.

## TABLE 7

| Raw material, % by weight |      | Feed No. |      |      |
|---------------------------|------|------|------|------|
|                           | 1    | 2    | 3    | 4    |
| Wheat                     | 20,0 | 10,0 | —    | —    |
| Barley                    | 33,5 | 33,5 | 33,5 | 33,5 |
| Husked oats               | 15,0 | 15,0 | 15,0 | 15,0 |
| Soybean meal              | 18,8 | 18,8 | 18,8 | 18,8 |
| Fish meal                 | 4,5  | 4,5  | 4,5  | 4,5  |
| Lime                      | 1,2  | 1,2  | 1,2  | 1,2  |
| Phosphate                 | 1,3  | 1,3  | 1,3  | 1,3  |
| Lysine                    | 0,05 | 0,05 | 0,05 | 0,05 |
| Methionine                | 0,15 | 0,15 | 0,15 | 0,15 |

| | | | | |
|---|---|---|---|---|
| Feed fat | 4,4 | 4,4 | 4,4 | 4,4 |
| Vit. + Trace elem. mix | 1,0 | 1,0 | 1,0 | 1,0 |
| Salt | 0,1 | 0,1 | 0,1 | 0,1 |
| Oat husks | | 10,0 | | |
| Steam-exploded birch biomass | | | 20,0 | |
| Straw, ground | | | | 20,0 |
| Calculated food values | | | | |
| Energy, MJ/kg | 12,5 | 11,0 | 9,9 | 9,9 |

Equally good growth results were obtained with the control feeds and with the feeds according to the invention.

The embodiment examples are merely meant to illustrate the invention, without in any way restricting it.


## Claims

1. A poultry feed containing protein raw material, carbohydrate raw material and fibre raw material consisting of at least one lignocellulose-containing natural material and/or fibre-containing byproduct of the wood conversion industry, characterized in that the feed contains fibre raw material at least about 5% by weight, advantageously over 15% by weight, and that the feed possibly contains enzyme preparation improving the digestibility of lignocellulose-containing natural material added thereto, up to 1% by weight, calculated on the feed quantity.

2. Feed according to claim 1, characterized in that the feed contains fibre raw material about 15-50% by weight, advantageously about 25-30% by weight.

3. Feed according to claim 1 or 2, characterized in that the feed contains oat husk, wood, e.g. birch biomass, and/or straw meal.

4. Poultry feed according to any one of claims 1-3, characterized in that the feed contains enzyme preparation admixed to a carrier, such as vegetable meal, for instance barley and/or wheat flour, to constitute a premix.

5. Poultry feed according to any one of claims 1-4, characterized in that the enzyme preparation contains cellulase 0.001-0.2% by weight, cellobiase 0.001-0.2% by weight or hemicellulase, e.g.xylanase 0.001-0.003% by weight; or a mixture of these.

6. Feeding method for improving the utilizability of poultry feed containing lignocellulose-containing natural material, such as oat husks, wheat husks, barley husks, hay and/or straw, characterized in that in connection with feeding to the feed is added enzyme, or enzyme mix, improving the digestibility of lignocellulose-containing natural material, 0.001-1% by weight.

7. Feeding method according to claims 6, characterized in that to feed containing lignocellulose-containing natural material 1-30% by weight, suitably 5-30% by weight, advantageously 15-30% by weight, is added enzyme or enzyme mix.

8. Feeding method according to claim 6 or 7, characterized in that to the feed is added enzyme, or enzyme mix, admixed to a carrier, such as vegetable meal, e.g. barley and/or wheat flour, to constitute a premix.

9. Feeding method according to any one of claims 6-8, characterized in that to the feed is added cellulase 0.001-0.2% by weight, cellobiase 0.001-0.2 and/or xylanase 0.001-0.003% by weight; or a mixture of these.

10. Procedure for improving the digestibility of poultry feed containing lignocellulose-containing natural material, such as oat husks, wheat husks, barley husks, hay and/or straw, characterized in that to the feed is added enzyme, or enzyme mix, cleaving lignocellulose-containing natural material, 0.001-0.1% by weight.

11. Procedure according to claim 10, characterized in that to feed containing lignocellulose-containing natural material 1-30% by weight, suitably 5-30% by weight, advantageously 15-30% by weight, is added enzyme or enzyme mix.

12. Procedure according to claim 10 or 11, characterized in that to the feed is added enzyme or enzyme mix which becomes activated in the organism of poultry.

13. Procedure according to any one of claims 10-12, characterized in that to the feed is added enzyme, or enzyme mix, admixed to a carrier, such as vegetable meal, e.g. barley and/or wheat flour, to constitute a premix.

14. Procedure according to any one of claims 10-13, characterized in that to the feed is added cellulase 0.001-0,2% by weight, cellobiase 0.001-0.2% by weight; and/or xylanase 0.001-0.003% by weight; or a mixture of these.